# EUROPEAN PATENT APPLICATION

(11) **EP 3 723 236 A1**
(43) Date of publication of application: **14.10.2020**
(21) Application number: 18899969.2
(22) Date of filing: 17.07.2018
(51) Int. Cl.: H02J 7/35

(54) **SOLAR-POWERED INTELLIGENT APPARATUS**

(30) Priority: 09.01.2018 CN 201820032062 U
(71) Applicant: Chao, Chenhsiang, Taichung City, Taiwan (TW)
(72) Inventor: Chao, Chenhsiang, Taichung City, Taiwan (TW)
(74) Representative: Hellmich, Wolfgang
(86) International application number: PCT/CN2018/095958
(87) International publication number: WO 2019/136951

(57) **Abstract**

A solar-powered intelligent apparatus includes a power supply device which includes a battery connected to a first voltage display module, and a solar power supply device including at least one solar panel and a voltage display and control device. The voltage display and control device is provided with a second voltage regulation module and a second voltage display and control module. The second voltage regulation module is provided with a step-up unit, a step-down unit, a MPPT control unit and a voltage stabilization unit. The second voltage display and control module has a dynamic comparison unit.

## Description

### BACKGROUND OF THE INVENTION

### 1. Fields of the invention

The present invention relates to a mobile electronic device, and more particularly, to a solar-powered intelligent apparatus in combination with solar energy, and capable of widely used in sea, land and air mobile electronic facilities.

### 2. Descriptions of Related Art

Among current solar-powered intelligent devices, there are devices adapted to convert solar energy to electric energy used to charge a battery.

However, the current charging systems still charge the battery when the battery outputs power supply, which not only affect the stability of the power supply of the battery but will decrease the battery life. In order to improve the shortcomings mentioned above, the applicant provides the solar-powered intelligent apparatus of the present invention to control the timing of charging and discharging so as to prolong the battery life, and to overcome the shortcomings of the current charging systems.

### SUMMARY OF THE INVENTION

The present invention relates to a solar-powered intelligent apparatus for supplying power to at least one electric apparatus, and comprises a power supply device which includes a battery electrically connected to a first voltage display module. The battery outputs a first output voltage. The first voltage display module measures and displays the first output voltage. A solar power supply device includes at least one solar panel and a voltage display and control device. The at least one solar panel is electrically connection to the voltage display control device and converts solar energy to a second output voltage. The voltage display and control device includes a second voltage regulation module and a second voltage display and control module. The second voltage regulation module includes a step-up unit, a step-down unit, a Maximum power point tracking control unit (MPPT) and the voltage stabilization unit. The second output voltage is adjusted by cooperation of the step-up unit, the step-down unit, the Maximum power point tracking control unit (MPPT) and the voltage stabilization unit. The second voltage display and control module is electrically connection to the first voltage display module. The second voltage display and control module controls and displays the second output voltage via the second voltage regulation module. The second voltage display and control module includes a dynamic comparison unit which provides a predetermined voltage value.

When the voltage of the battery is lower than the predetermined voltage value, the second output voltage charges the battery. When the voltage of the battery is larger than the predetermined voltage value, the second output voltage stops to charge the battery.

The battery is a lead battery or lithium battery.

The solar-powered intelligent apparatus is used in sea, land and air mobile electronic facilities such as automobiles, ships or unmanned aerial vehicles (UAV).

The solar-powered intelligent apparatus of the present invention is able to precisely switch the battery charge and discharge timing do as to prevent the battery from being charged at the same time when in use, to maintain the power supply stabilization of the battery. The solar-powered intelligent apparatus of the present invention adjusts the magnitude of the second output voltage and then charges the batteries of different kinds so as to extend the use life of the batteries.

### BRIEF DESCRIPTION OF THE DRAWINGS

Fig. 1 discloses the components of the present invention, and
Fig. 2 discloses detailed descriptions the components of the present invention.

### Description of components with numerals in the drawings

10 power supply device
101 battery
102 first voltage display module
20 solar power supply device
21 solar panel
22 voltage display and control device
221 second voltage regulation module
222 second voltage display and control module
2221 dynamic comparison unit
A step-up unit
B step-down unit
C maximum power point tracking control device
D voltage stabilization unit
V1 first output voltage
V2 second output voltage
30 electronic apparatus

### DETAILED DESCRIPTION OF THE PREFERRED EMBODIMENT

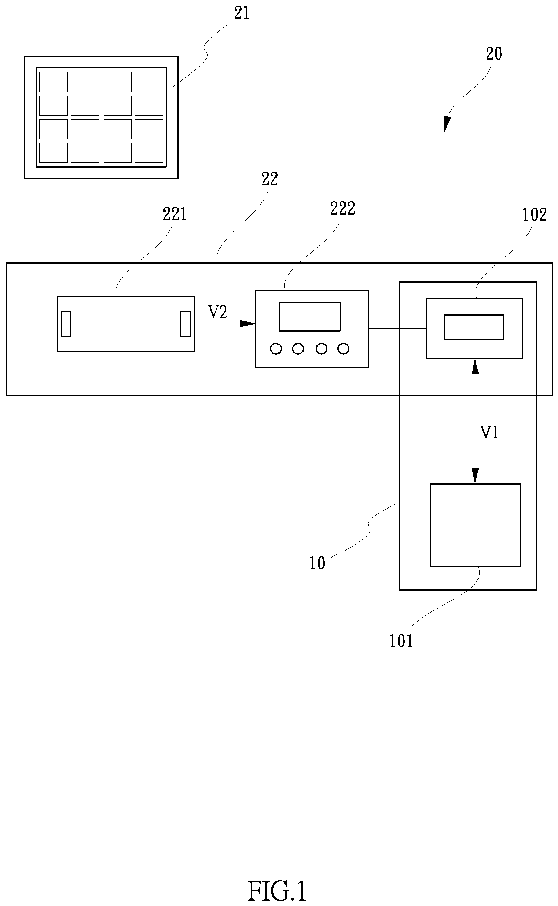

Referring to Fig. 1 which shows the components of the present invention. The present invention provides a solar-powered intelligent apparatus and comprises a power supply device 10. The power supply device 10 comprises a battery 101 which is electrically connected to a first voltage display module 102. The battery 101 outputs a first output voltage V1. The first voltage display module 102 measures and displays the first output voltage V1. A solar power supply device 20 comprises at least one solar panel 21 and a voltage display and control device 22. The at least one solar panel 21 is electrically connection to the voltage display control device 22 and converts solar energy to a second output voltage V2. The voltage display and control device 22 comprises a second voltage regulation module 221 and a second voltage display and control module 222.

The second voltage regulation module 221 includes features of adjusting the second output voltage V2 and stabilizes the voltage.

The second voltage display and control module 222 is electrically connection to the second voltage regulation module 221. The second voltage display and control module 222 controls and displays the second output voltage V2 via the second voltage regulation module 221. The second voltage display and control module 222 includes a dynamic comparison unit 2221 which provides a predetermined voltage value.

When a voltage of the battery 101 is lower than the predetermined voltage value, the second output voltage V2 charges the battery 101. When the voltage of the battery 101 is larger than the predetermined voltage value, the second output voltage V2 stops to charge the battery 101.

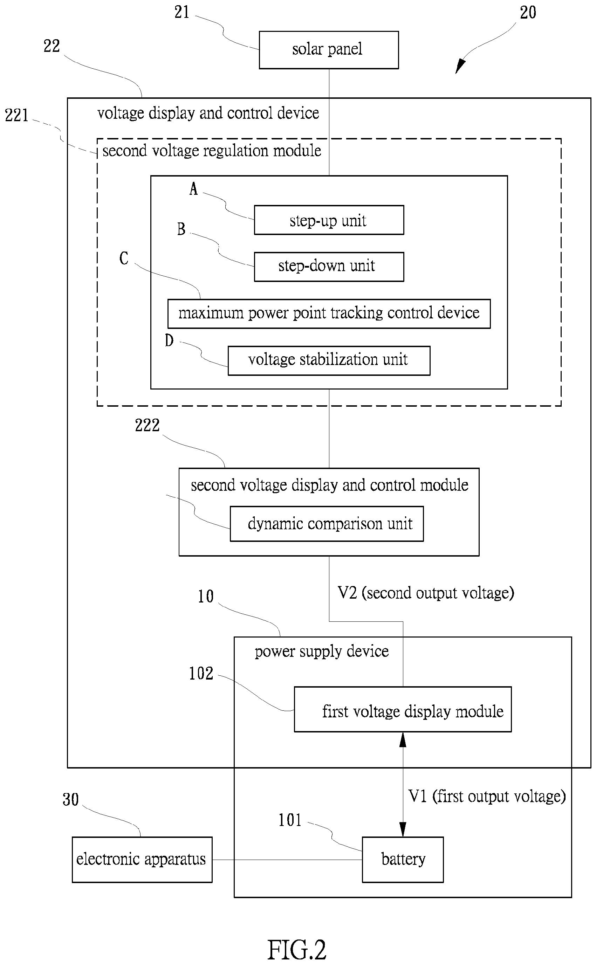

As shown in Fig. 2, which shows the details of the components of the present invention. The second voltage regulation module 221 comprises a step-up unit "A", a step-down unit "B", a Maximum power point tracking control unit "C" (MPPT) and a voltage stabilization unit "D". The second output voltage V2 is adjusted by cooperation of the step-up unit "A", the step-down unit "B", the Maximum power point tracking control unit "C" (MPPT) and the voltage stabilization unit "D".

The battery 101 is a lead battery or lithium battery.

The solar-powered intelligent apparatus is used in sea, land and air mobile electronic facilities such as automobiles, ships or unmanned aerial vehicles (UAV).

While we have shown and described the embodiment in accordance with the present invention, it should be clear to those skilled in the art that further embodiments may be made without departing from the scope of the present invention.

## Claims

1. A solar-powered intelligent apparatus for supplying power to at least one electric apparatus, **characterized in that**:
a power supply device comprises a battery which is electrically connected to a first voltage display module, the battery outputs a first output voltage, the first voltage display module measures and displays the first output voltage;
a solar power supply device comprises at least one solar panel and a voltage display and control device, the at least one solar panel is electrically connection to the voltage display control device and converts solar energy to a second output voltage, the voltage display and control device comprises a second voltage regulation module and a second voltage display and control module, the second voltage regulation module comprises a step-up unit, a step-down unit, a Maximum power point tracking control unit (MPPT) and a voltage stabilization unit, the second output voltage is adjusted by cooperation of the step-up unit, the step-down unit, the Maximum power point tracking control unit (MPPT) and the voltage stabilization unit, the second voltage display and control module is electrically connection to the first voltage display module, the second voltage display and control module controls and displays the second output voltage via the second voltage regulation module, the second voltage display and control module includes a dynamic comparison unit which provides a predetermined voltage value;
wherein, when a voltage of the battery is lower than the predetermined voltage value, the second output voltage charges the battery, and when the voltage of the battery is larger than the predetermined voltage value, the second output voltage stops to charge the battery.

2. The solar-powered intelligent apparatus as claimed in claim 1, wherein the battery is a lead battery or lithium battery.

3. The solar-powered intelligent apparatus as claimed in claim 1, wherein the solar-powered intelligent apparatus is used in sea, land and air mobile electronic facilities such as automobiles, ships or unmanned aerial vehicles (UAV).
